# EUROPÄISCHE PATENTSCHRIFT

(11) **EP 0 970 860 B1**
(45) Veröffentlichungstag und Bekanntmachung des Hinweises auf die Patenterteilung: **16.10.2002**
(21) Anmeldenummer: 99112167.4
(22) Anmeldetag: 24.06.1999
(51) Int. Cl.: B60T 1/087

(54) **Getriebe mit Retarder**
Gearbox with retarder
Boite de vitesses avec retardateur

(30) Priorität: 02.07.1998 DE 29811787 U; 26.04.1999 DE 19918701
(43) Veröffentlichungstag der Anmeldung: 12.01.2000
(73) Patentinhaber: Voith Turbo GmbH & Co. KG, 89522 Heidenheim (DE)
(72) Erfinder: Friedrich, Jürgen, 74564 Crailsheim (DE); Vogelsang, Klaus, 74564 Crailsheim (DE); Mandlik, Manfred, 74564 Crailsheim (DE)
(74) Vertreter: Dr. Weitzel & Partner

(56) Entgegenhaltungen:
- DE-A- 4 440 163
- DE-A- 4 445 178
- DE-A- 19 501 853
- US-A- 4 405 038

## Beschreibung

Die Erfindung betrifft ein Getriebe mit Retarder als Bestandteil eines Antriebsstranges, insbesondere für ein Kraftfahrzeug.

Retarderbremssysteme für Kraftfahrzeuge sind aus vielen Druckschriften bekanntgeworden. Eine Übersicht der verschiedenen Retarderbauarten ist in der Zeitschrift "lastauto omnibus" 4/1991, Seiten 30 bis 34, ausführlich beschrieben.

DE 298 11 787 U beschreibt einen Antriebsstrang für ein Kraftfahrzeug. Darin ist im einzelnen ein Motor dargestellt, ein diesem zugeordnetes Getriebe sowie eine Retardereinrichtung. Das Gehäuse des Getriebes weist eine Ausbuchtung auf. Diese umschließt einen Teil der Retardereinrichtung. Im übrigen ist der Retarder abgeschlossen durch ein Retardergehäuse, das an eine Stimwand des Getriebegehäuses angeflanscht ist. Die Retardereinrichtung weist ein Rotorschaufelrad mit einer Rotorwelle auf. Die Welle ist dabei in zwei Lagern gelagert. Das eine Lager stützt sich gegen die genannte Ausbuchtung des Getriebegehäuses ab, und das andere Lager ist am Retardergehäuse gelagert Beide Lager befinden sich innerhalb der Ausbuchtung des Getriebegehäuses. Sie werden deshalb über den Getriebeölhaushalt mit Schmieröl versorgt.

Die Ausführungsform hat sich in der Praxis bewährt. Sie ist dennoch verbesserungsbedürftig, insbesondere den Aufwand, den die Montage der Retardereinrichtung erfordert. Dies betrifft sowohl die Gesamtmontage des Retarders als auch das Ein- und Ausbauen bei Störungen oder Ausfällen der Lager.

In der DE 4445178 A1 ist eine Antriebsanlage für Nutzfahrzeuge mit einem Primärretarder gezeigt, bei der das Gehäuse des Retarders vollständig ins Steuerrädergehäuse integriert ist.

Der Erfindung liegt die Aufgabe zugrunde, ein Getriebe mit Retarder derart zu gestalten, daß die Montage einfacher, leichter und schneller durchgeführt werden kann, und daß der bauliche Aufwand verringert wird.

Diese Aufgabe wird durch die Merkmale von Anspruch 1 gelöst.

Im Gegensatz zu der genannten Druckschriften DE 298 11 787 U und DE 4445178 A1 wird durch die Erfindung die Retardereinrichtung zu einer völlig autarken Einheit gestaltet. Diese kann in fertig geprüftem Zustand ohne die Notwendigkeit des Einstellens eingebaut werden. Dabei ist ganz wichtig, daß beide Lager in einem Bauteil gelagert sind, das Bestandteil des Retarders ist, nämlich in einer diese beiden Lager aufnehmenden Lagergehäuse-Baugruppe. Es wird somit darauf verzichtet, das Getriebegehäuse in irgendeiner Weise zur unmittelbaren Lagerung der Rotorwelle der Retardereinrichtung heranzuziehen, im Gegensatz zu der genannten Druckschriften. Hieraus ergibt sich als weiterer Vorteil eine Verkürzung der Rotorwelle. Die Rotorwelle braucht somit nicht so lange zu sein, daß sie sich durch den gesamten Raum der genannten Ausbuchtung des Getriebegehäuses hindurcherstreckt, um an einer Wandung dieser Ausbuchtung gelagert zu werden.

Die Retardereinrichtung läßt sich aufgrund der genannten Eigenschaften rasch und schnell an das Getriebegehäuse anflanschen und in dieses einbauen, aber auch wieder ausbauen. Sie kann standardisiert werden, so daß sie sich auch Getrieben unterschiedlicher Typen und Abmessungen zuordnen läßt.

Die Erfindung behält gleichwohl jene Vorteile bei, die bei der vorbekannten Ausführung gegeben sind: Die beiden Lager werden vom Getriebeöl versorgt, und der Arbeitskreislauf des Retarders ist von diesem Öl unabhängig, sofern man dies will. Die Anordnung könnte aber auch so getroffen werden, daß ein Teil des Getriebeöls gleichzeitig Arbeitsöl des Retarders ist.

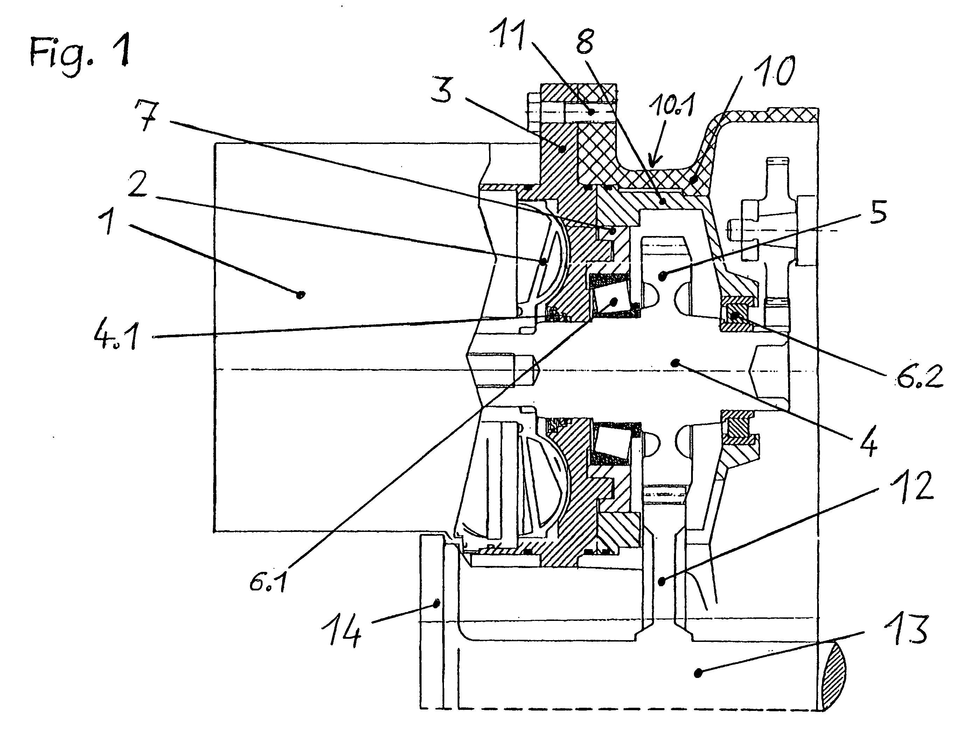

Die Erfindung ist anhand der Zeichnung näher erläutert. Darin ist im einzelnen folgendes dargestellt:

Man erkennt in einer Seitenansicht und größtenteils in einem Axialschnitt eine Retarder-Baugruppe 1. Diese umfaßt einen Rotor 2, ein Rotorgehäuse 3 und eine Rotorwelle 4. Auf der Rotorwelle 4 sitzt ein Retarder-Zahnrad 5 (z.B Hochgangritzel).

Die Rotorwelle 4 ist mittels zweier Lager gelagert. Man erkennt zum einen ein Kegelrollenlager 6.1, und zum anderen ein Zylinderrollenlager 6.2. Es könnten auch andere Lager statt der genannten verwendet werden.

Das Kegelrollenlager 6.1 ist radial außen von einem im Querschnitt Q-förmigen Ring 7 umschlossen.

Die beiden Lager sind ihrerseits in einem Lagergehäuse 8, insbesondere in der Retarder-Lateme gelagert.

Vom Getriebe erkennt man ein Ende des Getriebegehäuses 10. Getriebegehäuse 10 und Retarder-Rotorgehäuse 3 sind mittels Schrauben 11 miteinander verschraubt.

Gemäß der Erfindung ist die Rotorwelle 4 über die Lager 6.1 und 6.2 lediglich mittels dem Lagergehäuse 8 gelagert. Das Getriebegehäuse nimmt - jedenfalls nicht unmittelbar - eines der genannten Lager 6.1 oder 6.2 auf. Es findet natürlich eine mittelbare Lagerung statt, und zwar stützt sich das Lagergehäuse 8, wie ersichtlich, am Getriebegehäuse 10, und zwar an einem U-förmigen, ringförmigen Ansatz 10.1, der das Lagergehäuse 8 umschließt.

Das genannte Retarder-Zahnrad 5 kämmt mit einem entsprechenden Getriebe-Zahnrad 12, z.B. einem Hochgang-Zahnrad. Dieses ist auf der Getriebewelle 13, hier Getriebe-Abtriebswelle aufgekeilt. Weiter links ist ein Getriebe-Abtriebsflansch 14 erkennbar.

Zwischen der Rotorwelle 4 und dem Retarder-Rotorgehäuse 3 befindet sich eine Wellenabdichtung 4.1.

## Patentansprüche

1. Getriebe mit einem retarder
1.1 mit einem Getriebegehäuse (10);
1.2 mit einer Getriebewelle (13);
1.3 mit einer Rotorwelle (4) des Retarders;
1.4 mit einer Lagereinrichtung zum Lagern der Rotorwelle (4);
1.5 die Lagereinrichtung ist ausschließlich in einem Lagergehäuse (8) gelagert, das Bestandteil des Retarders ist;
1.6 auf der Rotorwelle (4) ist ein Retarder-Zahnrad (5) aufgekeilt, das sich in montiertern Zustand des Lagergehäuses (8) innerhalb des Getriebegehäuses (10) befindet;
1.7 auf der Getriebewelle (13) ist ein Getriebe-Zahnrad (12) aufgekeilt, das in montiertern Zustand des Lagergehäuses (8) mit dem Retarder-Zahnrad (5) durch ein Fenster im Lagergehäuse (8) hindurch kämmt; wobei der Rotor des Retarders, die Rotorwelle und die Lagereinrichtung eine Retardereinrichtung bilden,
**gekennzeichnet durch** die folgenden Merkmale:
1.8 das Lagergehäuse (8) ist **durch** eine Öffnung in einer Wand des Getriebegehäuses (10) in dieses einführbar und an diesem montierbarr;
1.9 die Retardereinrichtung ist zu einer antarken Einheit gestaltet.

2. Getriebe mit Retarder nach Anspruch 1, **dadurch gekennzeichnet, daß** das Lagergehäuse (8) konisch ist und sich gegen sein freies Ende hin verjüngt

3. Getriebe mit Retarder nach Anspruch 1 oder 2, **dadurch gekennzeichnet, daß** sich die Einführöffnung am Getriebegehäuse (10) in einer zur Getriebewelle (13) senkrechten Stirnwand des Getriebegehäuses (10) befindet.

4. Getriebe mit Retarder nach einem der Ansprüche 1 bis 3, **dadurch gekennzeichnet, daß** an der Vereinigungsstelle zwischen Getriebegehäuse (10) und Lagergehäuse (8) eine Zentrierhilfe vorgesehen ist, beispielsweise ein Bund.

5. Getriebe mit Retarder nach einem der Ansprüche 1 bis 4, **dadurch gekennzeichnet, daß** die Lagereinrichtung zwei Lager (6.1, 6.2) umfaßt, die in einem gegenseitigen Abstand auf der Rotorwelle (4) angeordnet sind.

6. Getriebe mit Retarder nach einem der Ansprüche 1 bis 5, **dadurch gekennzeichnet, daß** wenigstens eines der Lager (6.1, 6.2) ein Wälzlager ist

7. Getriebemit Retarder nach einem der Ansprüche 1 bis 5, dadurch gekennkzeichnet, daß wenigstens eines der Lager (6.1, 6.2) ein Gleitlager ist.

## Claims

1. Gearbox with a retarder
1.1 with a gearbox housing (10);
1.2 with a gear shaft (13);
1.3 with a rotor shaft (4) of the retarder;
1.4 with a bearing device for mounting the rotor shaft (4);
1.5 the bearing device is mounted exclusively in a bearing housing (8) which is a component of the retarder;
1.6 wedged on the rotor shaft (4) is a retarder gear wheel (5) located in the assembled state of the bearing housing (8) inside the gearbox housing (10);
1.7 wedged on the gear shaft (13) is a gearbox gear wheel (12) which in the assembled state of the bearing housing (8) meshes with the retarder gear wheel (5) through a window in the bearing housing (8), the rotor of the retarder, the rotor shaft and the bearing device forming a retarder device, **characterised by** the following features:
1.8 the bearing housing (8) can be inserted through an aperture in a wall of the gearbox housing (10) and can be assembled therein;
1.9 the retarder device is formed into a self-sufficient unit.

2. Gearbox with retarder according to claim 1, **characterised in that** the bearing housing (8) is conical and tapers toward its free end.

3. Gearbox with retarder according to claim 1 or 2, **characterised in that** the insertion aperture on the gearbox housing (10) is located in an end wall of the gearbox housing (10) which is vertical to the gear shaft (13).

4. Gearbox with retarder according to any one of claims 1 to 3, **characterised in that** a centring aid, for example a collar, is provided at the joining point between the gearbox housing (10) and bearing housing (8).

5. Gearbox with retarder according to any one of claims 1 to 4, **characterised in that** the bearing device comprises two bearings (6.1, 6.2) being arranged with mutual spacing on the rotor shaft (4).

6. Gearbox with retarder according to any one of claims 1 to 5, **characterised in that** at least one of the bearings (6.1, 6.2) is a roller bearing.

7. Gearbox with retarder according to any one of claims 1 to 5, **characterised in that** at least one of the bearings (6.1, 6.2) is a sliding bearing.

## Revendications

1. Boîte de vitesses avec un retardateur
1.1 avec un carter de boîte (10) ;
1.2 avec un arbre de boîte (13) ;
1.3 avec un arbre de rotor (4) de retardateur ;
1.4 avec un dispositif palier pour l'arbre de rotor (4) ;
1.5 le dispositif palier est placé exclusivement dans un boîtier de palier (8) qui est une partie constitutive du retardateur ;
1.6 sur l'arbre de rotor (4) est claveté une roue dentée (5) du retardateur qui se trouve à l'état monté du boîtier de palier (8) à l'intérieur du carter de boîte (10) ;
1.7 sur l'arbre de boîte (13) est clavetée une roue dentée de boîte (12) qui engrène à l'état monté du boîtier de palier (8) avec la roue dentée du retardateur (5) à travers une fenêtre ménagée dans le boîtier de palier (8), le rotor du retardateur, l'arbre de rotor et le dispositif palier formant un dispositif retardateur
**caractérisé par** les dispositions suivantes :
1.8 le boîtier de palier (8) est adapté à s'introduire à travers une ouverture dans une paroi du carter de boîte (10) et à se monter sur celle-ci
1.9 le dispositif retardateur est conçu en une unité autonome

2. Boîte de vitesses avec un retardateur selon la revendication 1
**caractérisé en ce que**
le boîtier de palier (8) est conique et il est effilé vers son extrémité libre.

3. Boîte de vitesses avec un retardateur selon la revendication 1 ou 2
**caractérisé en ce que**
l'ouverture d'introduction dans le carter de boîte (10) se situe dans une paroi frontale du carter de boîte (10) perpendiculaire à l'arbre de boîte (13)

4. Boîte de vitesses avec un retardateur selon l'une des revendications 1 à 3
**caractérisé en ce que**
à l'endroit de la jonction entre le carter de boîte (10) et le boîtier de palier (8) il est prévu une aide de centrage, par exemple un collet.

5. Boîte de vitesses avec un retardateur selon une des revendications 1 à 4
**caractérisé en ce que**
le dispositif palier comporte deux paliers (6.1, 6.2) qui sont disposés à une distance mutuelle sur l'arbre de rotor (4).

6. Boîte de vitesses avec un retardateur selon la revendication 5
**caractérisé en ce que**
au moins l'un des paliers (6.1, 6.2) est un palier à roulement

7. Boîte de vitesses avec un retardateur selon la revendication 5
**caractérisé en ce que**
l'un au moins des paliers (6.1, 6.2) est un palier à coussinets
